# EUROPÄISCHE PATENTSCHRIFT

(11) **EP 3 774 456 B1**
(45) Veröffentlichungstag und Bekanntmachung des Hinweises auf die Patenterteilung: **25.03.2026**
(21) Anmeldenummer: 19720426.6
(22) Anmeldetag: 11.04.2019
(51) Int. Cl.: B60R 25/24, G07C 9/00

(54) **ANORDNUNG FÜR EIN FAHRZEUG UND VEFAHREN**
ASSEMBLY FOR A VEHICLE AND PROCESS
SYSTÈME POUR UN VÉHICULE ET PROCÉDÉE

(30) Priorität: 13.04.2018 DE 102018108788
(43) Veröffentlichungstag der Anmeldung: 17.02.2021
(73) Patentinhaber: Huf Hülsbeck & Fürst GmbH & Co. KG, 42551 Velbert (DE)
(72) Erfinder: NEUHOFF, Stefan, 45239 Essen (DE)
(74) Vertreter: Bals & Vogel Patentanwälte PartGmbB
(86) Internationale Anmeldenummer: PCT/EP2019/059304
(87) Internationale Veröffentlichungsnummer: WO 2019/197551

(56) Entgegenhaltungen:
- DE-A1- 102005 055 515
- GB-A- 2 496 755

## Beschreibung

Die vorliegende Erfindung betrifft eine Anordnung für ein Fahrzeug zur Lokalisierung eines mobilen Geräts relativ zum Fahrzeug. Ferner bezieht sich die Erfindung auf Verfahren zur Anlernung der Anordnung und zur Durchführung der Lokalisierung.

Es ist aus dem Stand der Technik bekannt, dass Fahrzeuge Kommunikationseinheiten nutzen, um mit einem mobilen Gerät zu kommunizieren. Dieses mobile Gerät dient z. B. zur Authentifizierung und zur Aktivierung von Fahrzeugfunktionen. Es ist dabei oft erforderlich, dass neben der Authentifizierung eine weitere Sicherheitsprüfung durch eine Lokalisierung stattfindet. Diese umfasst z. B. eine Messung einer Entfernung zwischen der jeweiligen Kommunikationseinheit und dem mobilen Gerät, um sicherzustellen, dass ein Maximalabstand eingehalten wird.

Aus dem Dokument GB 2 496 755 A ist ein Zugangssystem für Fahrzeuge bekannt.

Hierbei hat sich das Problem herausgestellt, dass es oft technisch aufwendig und kostenaufwendig ist, die Genauigkeit und Sicherheit bei dieser Sicherheitsprüfung zu gewährleisten.

Es ist daher eine Aufgabe der vorliegenden Erfindung, die voranstehend genannten Nachteile zumindest zu reduzieren. Vorzugsweise ist es eine Aufgabe, eine verbesserte, insbesondere genauere und/oder kostengünstigere Lösung zur Lokalisierung vorzuschlagen. Die voranstehende Aufgabe wird gelöst durch eine Anordnung mit den Merkmalen des Anspruchs 1 und durch ein Verfahren mit den Merkmalen des Anspruchs 14 sowie durch ein Verfahren mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Anordnung beschrieben sind, selbstverständlich auch im Zusammenhang mit den erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch eine Anordnung, vorzugsweise Kommunikationsgeräteanordnung, bevorzugt ein Kommunikations- und/oder Lokalisierungssystem, für ein Fahrzeug zur Lokalisierung eines mobilen Geräts relativ zum Fahrzeug.

Das Fahrzeug ist z. B. ein Kraftfahrzeug, wie ein Personenkraftfahrzeug. Es kann als Elektrofahrzeug und/oder autonomes (selbstfahrendes) Fahrzeug und/oder Hybridfahrzeug und/oder dergleichen ausgebildet sein. Ferner kann das Fahrzeug ein passives Zugangssystem, wie ein sogenanntes keyless entry und/oder keyless go System, aufweisen. In anderen Worten kann ein Identifikationsgeber, z. B. ein mobiles Gerät, ohne aktive (manuelle) Betätigung zur Aktivierung einer sicherheitsrelevanten Fahrzeugfunktion und/oder Authentifizierung am Fahrzeug genutzt werden. Hierzu wird bspw. eine Annäherung des mobilen Geräts an das Fahrzeug automatisiert durch das Fahrzeug erkannt, und die Kommunikation ausgelöst.

Das mobile (d. h. tragbare) Gerät kann als ein elektronischer Schlüssel und/oder Mobilfunktelefon, insbesondere Smartphone, und/oder Tablet und/oder Computer und/oder dergleichen ausgeführt sein. Es kann möglich sein, dass das mobile Gerät wenigstens eine Funkschnittstelle, wie eine LF- (Low Frequency) und/oder UWB (Ultrabreitband, bzw. engl. ultra-wideband) aufweist, um ein Signal, wie ein Wecksignal und/oder Antwortsignal, vom Fahrzeug zu empfangen und/oder umgekehrt an das Fahrzeug zu senden.

Es ist insbesondere vorgesehen, dass die erfindungsgemäße Anordnung wenigstens eine der nachfolgenden Komponenten aufweist:
- wenigstens zwei Kommunikationseinheiten, vorzugsweise Kommunikationsgeräte und/oder Antennen, jeweils zur Kommunikation mit dem mobilen Gerät, welche vorzugsweise an unterschiedlichen Positionen am Fahrzeug angeordnet (insbesondere befestigt) sind, um (jeweils) anhand der (jeweiligen) Kommunikation eine Messinformation über einen (insbesondere aktuellen, gemessenen) Standort des mobilen Geräts zu ermitteln,
- eine (insbesondere elektronische) Verarbeitungsvorrichtung, welche dazu ausgeführt ist, anhand der Messinformationen und/oder anhand einer Anordnungsinformation über die Positionen der Kommunikationseinheiten am Fahrzeug das mobile Gerät zu lokalisieren.

Dies hat den Vorteil, dass eine besonders zuverlässige und/oder kostengünstige Lösung bereitgestellt wird, um durch mehrere Kommunikationseinheiten eine Genauigkeit der Lokalisierung zu verbessern. Hierzu wird besonders vorteilhaft der Umstand genutzt, dass mehrere Kommunikationseinheiten am Fahrzeug an unterschiedlichen Positionen zur Verfügung stehen. Dabei ist ein Erfindungsgedanke, dass die (ggf. vorbestimmte) Anordnungsinformation über die unterschiedlichen Positionen genutzt werden kann, um die Lokalisierung zu verbessern.

Die Kommunikationseinheiten sind vorzugsweise als Funkeinheiten, bevorzugt als UWB-Kommunikationseinheiten ausgebildet. In anderen Worten können die Kommunikationseinheiten dazu dienen, jeweils eine Kommunikation mit dem mobilen Gerät über Funk, bevorzugt UWB, durchzuführen. Diese Kommunikation dient z. B. zum (kontaktlosen) Datenaustausch, insbesondere von Authentifizierungsdaten zur Authentifizierung, wie wenigstens eines Codes. Auch kann die Kommunikation dazu dienen, eine Sicherheitsprüfung durchzuführen, z. B. eine Entfernungsmessung anhand einer Signallaufzeit eines Funksignals dieser Kommunikation. Es ist dabei denkbar, dass jede der Kommunikationseinheiten die Kommunikation unabhängig von den weiteren Kommunikationseinheiten durchführen kann. In anderen Worten sind die Kommunikationseinheiten jeweils dazu ausgeführt, die Kommunikation und ggf. auch die Sicherheitsprüfung durchzuführen. Die Sicherheitsprüfung ist z. B. die Ermittlung der Messinformation. Die Messinformation ist z. B. für eine Signallaufzeit des Kommunikations- bzw. Funksignals spezifisch, welches zwischen der entsprechenden Kommunikationseinheit und dem mobilen Gerät zur Kommunikation übertragen wird. Alternativ oder zusätzlich kann die Messinformation für eine Signalstärke oder dergleichen spezifisch sein.

Bspw. ist der Standort des mobilen Geräts durch einen bestimmten Abstand zum Fahrzeug, also zu einem bestimmten Bezugspunkt wie einem Türgriff oder dergleichen, gekennzeichnet. Auch kann der Standort ferner durch eine Richtung gekennzeichnet sein. Ausgehend vom Bezugspunkt kann die Lokalisierung also ggf. die Bestimmung eines Vektors beinhalten, welcher die Richtung und die Entfernung zum mobilen Gerät angibt.

Es kann gemäß einem weiteren Vorteil die Verarbeitungsvorrichtung anhand der Anordnungsinformation über die Positionen der Kommunikationseinheiten am Fahrzeug das mobile Gerät lokalisieren, indem bspw. die Messinformationen im Vergleich zu der Anordnungsinformation ausgewertet werden. Anhand der Messinformationen lässt sich bspw. die Entfernung des mobilen Geräts zu den einzelnen Kommunikationseinheiten ermitteln. Anhand der Anordnungsinformation kann wiederrum bspw. der Abstand und/oder der relative Standort der einzelnen Kommunikationseinheiten zueinander ermittelt werden. Die Kombination dieser Informationen ermöglicht es dabei, die Genauigkeit der Ermittlung des Standorts des Geräts, also der Lokalisierung, sehr zuverlässig zu verbessern.

Vorteilhafterweise kann im Rahmen der Erfindung vorgesehen sein, dass die Anordnungsinformation als eine solche Information ausgeführt ist, welche anhand der wenigstens zwei Positionen der Kommunikationseinheiten bestimmt ist (d. h. zuvor bestimmt wurde), vorzugsweise eine Information über einen Unterschied der Positionen der Kommunikationseinheiten am Fahrzeug, wie eine Entfernung der Kommunikationseinheiten zueinander und/oder eine absolute Positionsangabe am Fahrzeug (wie an einem bestimmten Türgriff, Schweller, an einer Koordinate der Fahrzeuggeometrie oder dergleichen). Damit kann die Anordnungsinformation genutzt werden, um unterschiedliche Messinformationen unterschiedlicher Kommunikationseinheiten heranzuziehen, um die Lokalisierung genauer durchzuführen. Bspw. wird hierbei die Verarbeitungsvorrichtung genutzt, um anhand der Anordnungsinformation einen Unterschied der Messinformationen zueinander aufgrund der unterschiedlichen Positionen herauszurechnen.

Bspw. weist die Verarbeitungsvorrichtung zur Lokalisierung wenigstens einen Mikrocontroller und/oder integrierten Schaltkreis und/oder dergleichen auf. Insbesondere weist die Verarbeitungsvorrichtung einen UWB-Controller bzw. -treiber auf, um die Kommunikation als UWB Kommunikation durchführen zu können.

In einer weiteren Möglichkeit kann vorgesehen sein, dass die Kommunikationseinheiten jeweils als UWB-Kommunikationseinheit ausgebildet sind, um vorzugsweise jeweils die Kommunikation als eine UWB-Kommunikation mit dem mobilen Gerät durchzuführen. Bei dieser Kommunikation kann es sich um eine Nahbereichsfunkkommunikation handeln, welche einen sehr großen Frequenzbereich nutzt. Bspw. kommt dazu eine Frequenz-Bandbreite der Kommunikation von mindestens 500 MHz zum Einsatz. Damit kann eine besonders zuverlässige Kommunikation bereitgestellt werden, welche insbesondere im Hinblick auf eine Umgehung der Sicherheitsmechanismen (wie der Sicherheitsprüfung) besonders vorteilhaft ist.

Ein weiterer Vorteil kann im Rahmen der Erfindung erzielt werden, wenn als die Kommunikationseinheiten wenigstens drei oder wenigstens vier oder wenigstens fünf Kommunikationseinheiten jeweils mit unterschiedlichen Positionen am Fahrzeug (d. h. an unterschiedlichen Positionen am Fahrzeug angeordnet) vorgesehen sind, um vorzugsweise die Lokalisierung durch die Verarbeitungsvorrichtung gemäß einer Triangulation durchzuführen. Hierzu kann z. B. durch die Verarbeitungsvorrichtung ein Computerprogramm genutzt werden, welches zur Lokalisierung trigonometrische Funktionen oder darauf basierende Methoden verwendet. Dies ermöglicht eine besonders gute Winkel- bzw. Richtungsmessung und/oder Abstandsbestimmung.

Es ist ferner denkbar, dass als die Kommunikationseinheiten wenigstens drei oder wenigstens vier oder wenigstens fünf oder maximal sechs oder maximal sieben Kommunikationseinheiten jeweils mit unterschiedlichen Positionen am Fahrzeug vorgesehen sind, um vorzugsweise eine Genauigkeit der Lokalisierung durch die Verarbeitungsvorrichtung anhand der Anordnungsinformation über die unterschiedlichen Positionen zu erhöhen. Bspw. können die Kommunikationseinheiten am Fahrzeug originär vorgesehen sein, ohne dass dabei zunächst die erfindungsgemäße Lokalisierung Berücksichtigung findet (z. B. sind mehrere Kommunikationseinheiten vorgesehen, um primär eine ausreichende Kommunikationsabdeckung zu erhalten). Es kann also in anderen Worten ggf. eine bestehende Anordnung der Kommunikationseinheiten am Fahrzeug genutzt werden, um diese nachträglich durch die Bestimmung der Anordnungsinformation für die Lokalisierung gemäß der erfindungsgemäßen Anordnung bzw. dem erfindungsgemäßen Verfahren zu verwenden.

Weiter ist im Rahmen der Erfindung denkbar, dass die Anordnungsinformation als eine Information ausgeführt ist, welche von einer Geometrie des Fahrzeuges abhängig ist. Daher kann die Anordnungsinformation ggf. auch dadurch bestimmt werden, dass eine vorbekannte Geometrie des Fahrzeuges ausgewertet wird.

Es kann weiter möglich sein, dass die Kommunikationseinheiten jeweils (insbesondere einzeln) dazu ausgeführt sind, vorzugsweise jeweils kooperativ mit der oder wenigstens einer weiteren Verarbeitungsvorrichtung, die Messinformation durch eine Laufzeitmessung und/oder anhand einer Signalstärke bei der Kommunikation zu ermitteln, vorzugsweise um jeweils anhand der Messinformation einen Abstand (der entsprechenden Kommunikationseinheit) zum mobilen Gerät zu ermitteln. Des Weiteren kann es möglich sein, dass diese durch einzelne Kommunikationseinheiten ermittelte Messinformation eine Lokalisierung mit geringerer Genauigkeit ermöglicht, als die anhand der weiteren Messinformation(en) und der Anordnungsinformation durchgeführten Lokalisierung. Entsprechend kann optional die Lokalisierung dann verbessert werden, wenn wenigstens eine weitere Messinformation vorliegt.

Es ist ferner denkbar, dass wenigstens eine Speichervorrichtung zur Zwischenspeicherung der jeweiligen ermittelten Messinformation und zur dauerhaften und/oder nicht-flüchtigen Speicherung der Anordnungsinformation vorgesehen ist, welche vorzugsweise für ein Auslesen der Messinformationen und/oder der Anordnungsinformation durch die Verarbeitungsvorrichtung mit der Verarbeitungsvorrichtung verbunden ist. Die Verbindung weist z. B. eine elektrische und/oder eine andersartige Signalverbindung auf. Damit ist zuverlässig die Lokalisierung durchführbar.

Bevorzugt kann im Rahmen der Erfindung vorgesehen sein, dass (wenigstens oder genau) eine der Kommunikationseinheiten als eine Mastereinheit ausgebildet ist, um vorzugsweise selbst die Messinformation zu ermitteln und/oder um wenigstens eine weitere Messinformation von der wenigstens einen weiteren Kommunikationseinheit zu empfangen, welche bevorzugt durch die wenigstens eine weitere Kommunikationseinheit ermittelt wurde.

Zudem ist im Rahmen der Erfindung denkbar, dass die Mastereinheit die Verarbeitungsvorrichtung aufweist, um insbesondere anhand der selbst ermittelten Messinformation und/oder der wenigstens einen weiteren empfangenen Messinformation und/oder anhand der Anordnungsinformation über die Positionen der Kommunikationseinheiten am Fahrzeug das mobile Gerät zu lokalisieren, vorzugsweise die Genauigkeit einzelner Messinformationen zur Lokalisierung zu erhöhen. Auf diese Weise kann die "Intelligenz" für die Lokalisierung zentral in eine der Kommunikationseinheiten integriert werden, und so eine kompakte und anpassungsfähige Anordnung bereitgestellt werden.

Vorteilhaft ist es zudem, wenn die wenigstens eine weitere Kommunikationseinheit als Slaveeinheit konfiguriert ist, um die jeweils erfasste Messinformation an die Mastereinheit zu übermitteln. Diese Slaveeinheit kann z. B. anders und/oder einfacher aufgebaut sein als die Mastereinheit, z. B. nicht die Verarbeitungsvorrichtung zur Durchführung der Lokalisierung anhand der Anordnungsinformation aufweisen. Damit können die weiteren Kommunikationseinheiten einfacher und kostengünstiger ausgebildet sein als die Mastereinheit.

Es kann im Rahmen der Erfindung vorgesehen sein, dass jede der Kommunikationseinheiten dazu ausgeführt ist, selbst eine jeweilige Lokalisierung, vorzugsweise eine Entfernungsmessung und/oder Standortbestimmung und/oder Ortung und/oder Bestimmung eines Maximalabstands des mobilen Geräts zum Fahrzeug, des mobilen Geräts durchzuführen, wobei vorzugsweise die Verarbeitungsvorrichtung dazu ausgeführt ist, die Lokalisierung, bevorzugt Entfernungsmessung und/oder Standortbestimmung und/oder Ortung und/oder Bestimmung des Maximalabstands des mobilen Geräts zum Fahrzeug, anhand der Anordnungsinformation mit höherer Genauigkeit als die jeweiligen einzelnen Lokalisierungen der Kommunikationseinheiten durchzuführen. Dies kann damit zusammenhängen, dass das Fahrzeug selbst als Randbedingung zur Erhöhung der Genauigkeit genutzt wird. Hierzu ist die Anordnungsinformation vorgesehen, welche diese Randbedingung, z. B. fahrzeuggeometrieabhängig, aufweist.

Von weiterem Vorteil kann vorgesehen sein, dass die Kommunikationseinheiten jeweils wenigstens oder genau eine Antenne aufweisen, welche vorzugsweise außen am Fahrzeug befestigt und/oder auf einen Außenbereich des Fahrzeuges ausgerichtet sind, um bspw. die Lokalisierung des mobilen Geräts im Außenbereich des Fahrzeuges durchzuführen, sodass insbesondere ein Maximalabstand des mobilen Geräts zum Fahrzeug anhand der Lokalisierung bestimmt werden kann. Auf diese Weise kann zuverlässig das Risiko einer Umgehung der Sicherheitsprüfung reduziert werden, z. B. von Relay-Station-Attacks.

Erfindungsgemäß die Verarbeitungsvorrichtung und/oder wenigstens eine weitere Verarbeitungsvorrichtung dazu ausgeführt ist, die Kommunikation mit dem mobilen Gerät nur dann zur Aktivierung von wenigstens einer Fahrzeugfunktion zu autorisieren, wenn ein anhand der Lokalisierung bestimmter Maximalabstand des mobilen Geräts zum Fahrzeug eingehalten wird. Vorzugsweise beträgt der Maximalabstand 1 m bis 10 m, bevorzugt 2 m bis 8 m, besonders bevorzugt 4 m bis 6 m . Sollte hingegen der Maximalabstand nicht eingehalten werden, kann die Autorisierung verhindert sein, also die Aktivierung der Fahrzeugfunktion verhindert sein. Die Fahrzeugfunktion ist z. B. eine Entriegelung des Fahrzeuges und sollte vorzugsweise nur dann möglich sein, wenn der Maximalabstand eingehalten wird. Eingehalten ist der Maximalabstand z. B. dann, wenn eine (gemessene Ist-) Entfernung zwischen einem Bezugspunkt (wie einer bestimmten Kommunikationseinheit) des Fahrzeuges und dem mobilen Gerät unterhalb des Maximalabstands liegt und/oder diesem entspricht.

Außerdem kann es im Rahmen der Erfindung von Vorteil sein, dass ein Annäherungssensor vorgesehen ist, vorzugsweise in einem Türgriff und/oder Schweller und/oder einer Heckklappe und/oder einem Stoßfänger und/oder in einem Frontbereich des Fahrzeuges, um bei Detektion einer Annäherung eines Objektes, vorzugsweise des mobilen Geräts und/oder eines Benutzers und/oder einer Hand, die Kommunikation und/oder die Erfassung der jeweiligen Messinformation und/oder die Lokalisierung auszulösen. Hierzu ist der Annäherungssensor z. B. als kapazitiver Sensor mit wenigstens einer Sensorelektrode ausgeführt. Dies ermöglicht es, die Kommunikation (z. B. zur Authentifizierung) bei Bedarf und damit energiesparend auszulösen.

Ebenfalls Gegenstand der Erfindung ist ein Verfahren, vorzugsweise Lokalisierungsverfahren, zur Lokalisierung eines mobilen Geräts relativ zum Fahrzeug, vorzugsweise durch eine erfindungsgemäße Anordnung.

Vorteilhafterweise kann bei einem erfindungsgemäßen Verfahren zumindest einer der nachfolgenden Schritte durchgeführt werden, wobei die Schritte bevorzugt nacheinander in der angegebenen Reihenfolge oder in beliebiger Reihenfolge durchgeführt werden, und ggf. auch einzelne Schritte wiederholt werden können:
- Ermitteln einer ersten Messinformation anhand einer ersten Kommunikation (z. B. UWB-Kommunikation) mit dem mobilen Gerät durch eine erste Kommunikationseinheit (am Fahrzeug),
- Ermitteln wenigstens einer zweiten Messinformation anhand wenigstens einer zweiten Kommunikation (z. B. UWB-Kommunikation) mit dem mobilen Gerät durch wenigstens eine zweite Kommunikationseinheit (am Fahrzeug),
- Durchführen einer Lokalisierung des mobilen Geräts relativ zum Fahrzeug anhand der ersten und der wenigstens zweiten Messinformation sowie anhand einer Anordnungsinformation über die Positionen der Kommunikationseinheiten am Fahrzeug.

Damit bringt das erfindungsgemäße Verfahren die gleichen Vorteile mit sich, wie sie ausführlich mit Bezug auf eine erfindungsgemäße Anordnung beschrieben worden sind. Zudem können die erste und wenigstens zweite Kommunikationseinheit gemäß den Kommunikationseinheiten einer erfindungsgemäßen Anordnung ausgebildet sein. Gleiches gilt für die Messinformationen, und für die erste und wenigstens zweite Kommunikation, welche jeweils gemäß einer erfindungsgemäßen Anordnung ausgeführt sein können.

Ebenfalls unter Schutz gestellt ist ein Verfahren zum Anlernen einer Anordnung für ein Fahrzeug zur Lokalisierung eines mobilen Geräts relativ zum Fahrzeug, vorzugsweise bei einer erfindungsgemäßen Anordnung und/oder zur Vorbereitung einer Lokalisierung nach einem erfindungsgemäßen Lokalisierungsverfahren.

Vorteilhafterweise kann bei diesem erfindungsgemäßen Verfahren zum Anlernen zumindest einer der nachfolgenden Schritte durchgeführt werden, wobei die Schritte bevorzugt nacheinander in der angegebenen Reihenfolge oder in beliebiger Reihenfolge durchgeführt werden, und ggf. auch einzelne Schritte wiederholt werden können:
- Montage von wenigstens zwei Kommunikationseinheiten an unterschiedlichen Positionen am Fahrzeug,
- Durchführen einer Positionsbestimmung, vorzugsweise Positionsmessung der Positionen, um eine Anordnungsinformation über die Positionen in einem Montagezustand der Kommunikationseinheiten zu bestimmen,
- Speichern der Anordnungsinformation in einer nicht-flüchtigen Speichervorrichtung.

Damit bringt dieses erfindungsgemäße Verfahren zum Anlernen die gleichen Vorteile mit sich, wie sie ausführlich mit Bezug auf eine erfindungsgemäße Anordnung beschrieben worden sind. Zudem können die Kommunikationseinheiten gemäß den Kommunikationseinheiten einer erfindungsgemäßen Anordnung ausgebildet sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen:
- Figur 1: eine schematische Draufsicht auf ein Fahrzeug mit einer erfindungsgemäßen Anordnung,
- Figur 2: eine weitere schematische Draufsicht auf ein Fahrzeug mit einer erfindungsgemäßen Anordnung,
- Figur 3: eine weitere schematische Draufsicht auf ein Fahrzeug mit einer erfindungsgemäßen Anordnung zur Visualisierung eines Maximalabstands.

In den nachfolgenden Figuren werden für die gleichen technischen Merkmale auch von unterschiedlichen Ausführungsbeispielen die identischen Bezugszeichen verwendet.

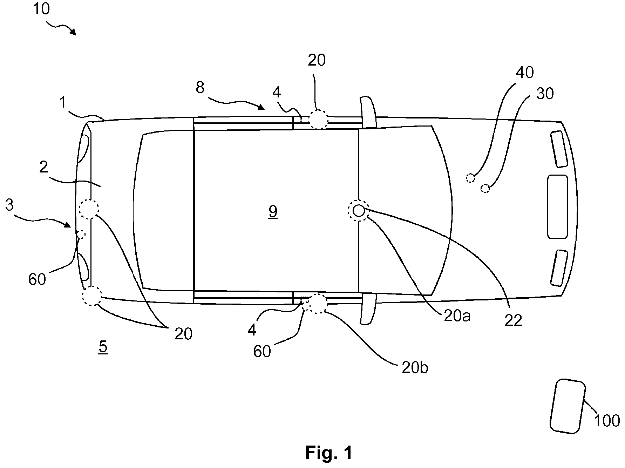

In Figur 1 ist eine erfindungsgemäße Anordnung 10 dargestellt, welche für ein Fahrzeug 1 zur Lokalisierung eines mobilen Geräts 100 relativ zum Fahrzeug 1 genutzt werden kann. Gezeigt ist ein Montagezustand, in welchem die erfindungsgemäße Anordnung 10 in das Fahrzeug 1 integriert, d. h. damit fest und/oder lösbar und/oder unlösbar verbunden sein kann. Die erfindungsgemäße Anordnung 10 kann dabei wenigstens zwei (oder auch wenigstens drei, falls z. B. eine Triangulation genutzt wird) Kommunikationseinheiten 20, 20a, 20b jeweils zur Kommunikation mit dem mobilen Gerät 100 aufweisen. Die Kommunikationseinheiten 20 können separat voneinander ausgebildet sein und/oder in Signalverbindung miteinander stehen (z. B. elektrisch oder über Funk miteinander verbunden sein) und/oder im Montagezustand lösbar oder unlösbar am Fahrzeug befestigt sein. Des Weiteren können die Kommunikationseinheiten 20 an unterschiedlichen Positionen am Fahrzeug 1 angeordnet sein, und jeweils anhand einer Kommunikation (mit dem mobilen Gerät 100) eine Messinformation über einen Standort des mobilen Geräts 100 ermitteln. Bspw. sind die Kommunikationseinheiten 20 mindestens 1 cm oder mindestens 10 cm oder mindestens 100 cm voneinander entfernt am Fahrzeug 1 positioniert.

Es ist denkbar, dass die Kommunikation primär zum Datenaustausch mit dem mobilen Gerät 100 dient. Sekundär kann die Kommunikation, welche z. B. durch ein Funksignal ermöglicht wird, auch eine Entfernungsmessung oder dergleichen bereitstellen. Dies bietet eine zusätzliche Sicherheit, wenn die Kommunikation (bspw. zum Entriegeln des Fahrzeuges) nur innerhalb einer bestimmten Entfernung (Maximalabstands 120) zur Aktivierung von sicherheitsrelevanten Funktionen (wie der Entriegelung) am Fahrzeug 1 genutzt werden kann.

Um anhand der Messinformationen die Kommunikation auszuwerten, kann eine Verarbeitungsvorrichtung 30 vorgesehen sein. Diese ist bspw. Teil einer zentralen Fahrzeugelektronik oder eines Steuergeräts oder wenigstens einer der Kommunikationseinheiten 20, und umfasst z. B. wenigstens einen integrierten Schaltkreis und/oder dergleichen. Weiter kann die Verarbeitungsvorrichtung 30 dazu ausgeführt sein, die Messinformationen anhand einer Anordnungsinformation über die Positionen der Kommunikationseinheiten 20 am Fahrzeug 1 auszuwerten, um das mobile Gerät 100 zu lokalisieren. Da die Kommunikationseinheiten 20 an unterschiedlichen Standorten am Fahrzeug 1 angeordnet sind, unterscheiden sich entsprechend die jeweiligen Messinformationen voneinander. Insbesondere ist die jeweilige Messinformation eine Information über den Standort des mobilen Geräts 100 relativ zu derjenigen Kommunikationseinheit 20, welche die Messinformation ermittelt hat. Die Kombination der ermittelten Messinformationen kann daher die Genauigkeit der Messinformation erhöhen, setzt jedoch ggf. voraus, dass die Unterschiede der Positionen der Kommunikationseinheiten 20 am Fahrzeug 1 bekannt sind. Daher wird die Anordnungsinformation genutzt, um diese Unterschiede zur Erhöhung der Genauigkeit zu nutzen. In anderen Worten kann die Anordnungsinformation als eine Information ausgeführt sein, welche anhand der wenigstens zwei Positionen der Kommunikationseinheiten 20 bestimmt ist, vorzugsweise eine Information über einen Unterschied der Positionen der Kommunikationseinheiten 20 am Fahrzeug 1.

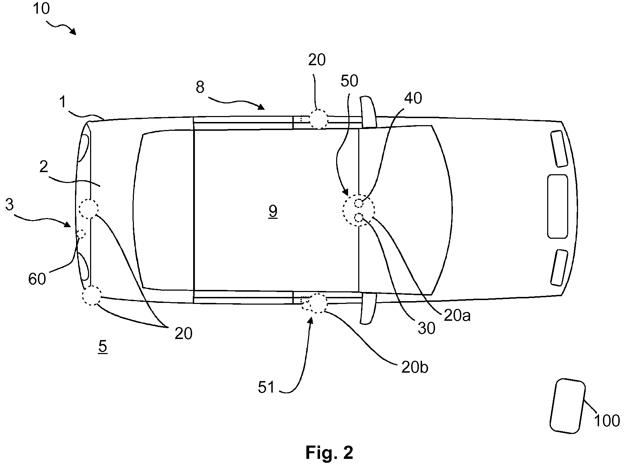

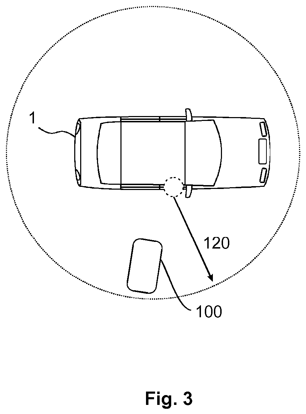

In Figur 1 und 2 sind z. B. eine erste Kommunikationseinheit 20a und eine zweite Kommunikationseinheit 20b gezeigt. Die erste Kommunikationseinheit 20a ist im Bereich des Fahrzeugdaches 9 und die zweite Kommunikationseinheit 20b im Bereich eines Türgriffs 4 angeordnet. Weitere mögliche Positionen sind z. B. an und/oder benachbart zu einer Heckklappe 2 und/oder an einem Schweller 8 und/oder an und/oder benachbart zu einem Stoßfänger 3 und/oder an einem Randbereich und/oder Eckbereich des Fahrzeuges 1. Es ist möglich, dass die Kommunikationseinheiten 20 jeweils als UWB-Kommunikationseinheit 20 ausgebildet sind, um jeweils die Kommunikation als eine UWB-Kommunikation mit dem mobilen Gerät 100 durchzuführen. Auf diese Weise können die Kommunikationseinheiten 20 jeweils die Kommunikation durchführen, um Informationen, d. h. Daten, z. B. zur Durchführung einer Authentifizierung des mobilen Geräts 100 zwischen dem mobilen Gerät 100 und dem Fahrzeug 1 auszutauschen. Es kann ein Annäherungssensor 60 im Bereich oder innerhalb des Türgriffs 4 angeordnet sein, welcher eine Annäherung eines Benutzers (ggf. mit dem mobilen Gerät 100) erkennt. Wenn der Annäherungssensor 60 als kapazitiver Sensor im Türgriff 4 ausgeführt ist, kann dies bspw. das Annähern einer Hand des Benutzers an den Türgriff 4 sein. Ein Hineingreifen oder Berühren des Türgriffs 4 lässt darauf schließen, dass eine Türöffnung erfolgen soll. Daher kann die Detektion der Annäherung durch den Annäherungssensor 60 einen Authentifizierungsvorgang initiieren, um bei erfolgreicher Authentifizierung die Türöffnung freizugeben, z. B. ein Schließsystem des Fahrzeuges 1 zu entriegeln. Wenn die Detektion erfolgreich die Annäherung feststellt, kann z. B. die Kommunikation über wenigstens eine Kommunikationseinheit 20 initiiert werden. Für die Initiierung kann zunächst ein Wecksignal, wie ein LF-Funksignal (LF steht hierbei für Low Frequency), ausgesandt werden. Wenn dieses vom mobilen Gerät 100 empfangen wird, antwortet das mobile Gerät 100 bspw. durch die Aussendung eines ersten Antwortsignals, z. B. über UWB. Dieses erste Antwortsignal kann von wenigstens einer Kommunikationseinheit 20 empfangen werden, woraufhin die entsprechende Kommunikationseinheit 20 und/oder auch weitere Kommunikationseinheiten 20 - also das Fahrzeug 1 - durch die Aussendung eines zweiten Antwortsignals antwortet (z. B. über UWB). Dieses kann wiederrum vom mobilen Gerät 100 empfangen werden und ggf. ein drittes Antwortsignal an das Fahrzeug 1 gesendet werden. Im ersten oder dritten Antwortsignal können ferner Authentifizierungsinformationen wie ein Authentifizierungscode enthalten sein, welche vom Fahrzeug 1 ausgewertet werden, um gemäß einer Authentifizierungsprüfung bei Übereinstimmung mit einer Vorgabe eine sicherheitsrelevante Fahrzeugfunktion freizugeben oder zu aktivieren (wie die Durchführung der Entriegelung). Darüber hinaus kann anhand der Kommunikation (also dem Empfangen und/oder Aussenden der Antwortsignale) noch eine weitere Sicherheitsprüfung stattfinden. Dies kann die Lokalisierung sein, wie die Überprüfung der Entfernung (wie eines Maximalabstands 120) zwischen Fahrzeug 1 und mobilem Gerät 100 und/oder die Feststellung, an welcher Position am Fahrzeug 1 sich das mobile Gerät 100 konkret befindet. Letzteres kann sich z. B. auf eine Unterscheidung beziehen, ob sich das mobile Gerät 100 im Innenraum oder im Außenbereich 5 des Fahrzeuges 1 befindet (Innen-Außenraum-Erkennung), oder ob sich das mobile Gerät 100 an einem Türgriff 4 des Fahrzeuges 1 oder ggf. an welchem Türgriff 4 befindet. Nur wenn die Überprüfung ergibt, dass eine Vorgabe erfüllt ist, d. h. die Sicherheitsprüfung erfolgreich ist, wird die Authentifizierungsprüfung und/oder die sicherheitsrelevante Fahrzeugfunktion freigegeben oder aktiviert, also autorisiert. Die Vorgabe ist bspw., dass eine Ist-Entfernung zwischen dem Fahrzeug 1 und dem mobilen Gerät 100 dem Maximalabstand 120 entspricht oder diesen unterschreitet oder, dass das mobile Gerät 100 sich in einem Maximalabstand zu einem bestimmten Türgriff 4 befindet. Um dieses Prinzip beispielhaft zu verdeutlichen, ist in Figur 3 gezeigt, dass der Maximalabstand 120 zum Fahrzeug 1 überprüft wird. So kann die Verarbeitungsvorrichtung 30 und/oder wenigstens eine weitere Verarbeitungsvorrichtung 30 dazu ausgeführt sein, die Kommunikation mit dem mobilen Gerät 100 nur dann zur Aktivierung von Fahrzeugfunktionen (also auch der Authentifizierungsprüfung) zu autorisieren, wenn der anhand der Lokalisierung bestimmte Maximalabstand 120 des mobilen Geräts 100 zum Fahrzeug 1 eingehalten wird, wobei vorzugsweise der Maximalabstand 120 1 m bis 10 m, bevorzugt 2 m bis 8 m, besonders bevorzugt 4 m bis 6 m, beträgt.

Damit die Sicherheitsprüfung besonders sicher und genau durchgeführt werden kann, und ggf. Umgehungsmaßnahmen wie Relay-Station-Attacks vermieden werden können, können zur verbesserten Lokalisierung wenigstens zwei Kommunikationseinheiten 20 genutzt werden. Die beispielhaft gezeigte erste Kommunikationseinheit 20a und zweite Kommunikationseinheit 20b unterscheiden sich hinsichtlich ihrer Position, also einerseits am Fahrzeugdach 9 und andererseits am rechtsseitigen Außentürgriff 4. Wenn beide die Lokalisierung des mobilen Geräts 100 anhand ihrer jeweiligen Kommunikation durchführen, kommt es zu unterschiedlichen Ergebnissen. Bspw. wird die Lokalisierung anhand einer Messung der Signallaufzeit (insbesondere Time of Flight) des zur Kommunikation genutzten Funksignals (z. B. UWB-Signals und/oder wenigstens einer der Antwortsignale) durchgeführt. In anderen Worten kann durch die erste Kommunikationseinheit 20a eine erste Messung einer ersten Entfernung anhand einer ersten Kommunikation zwischen dem mobilen Gerät 100 und der ersten Kommunikationseinheit 20a und durch die zweite Kommunikationseinheit 20b eine zweite Messung einer zweiten Entfernung anhand einer zweiten Kommunikation zwischen dem mobilen Gerät 100 und der zweiten Kommunikationseinheit 20b erfolgen. Durch die erste Messung kann z. B. eine erste Messinformation ermittelt werden, um anhand der ersten Messinformation (wie eine Signallaufzeit) die erste Entfernung zu bestimmen. Durch die zweite Messung kann z. B. eine zweite Messinformation ermittelt werden, um anhand der zweiten Messinformation (wie eine Signallaufzeit) die zweite Entfernung zu bestimmen. Die erste Entfernung ist in der in Figur 1 und 2 gezeigten Anordnung größer als die zweite Entfernung zum mobilen Gerät 100. Dieser Unterschied kann bei Kenntnis der Positionen der Kommunikationseinheiten 20 am Fahrzeug genutzt werden, um die Genauigkeit der Lokalisierung des mobilen Geräts 100 zu erhöhen. Auch kann ggf. die Genauigkeit der Messung der ersten Entfernung und die Messung der zweiten Entfernung erhöht werden, wenn anschließend beide Messungen kombiniert werden. Vorzugsweise können hierzu die unterschiedlichen Positionen der Kommunikationseinheiten 20 (also die Anordnungsinformation) genutzt werden, um die Differenz der gemessenen Entfernungen herauszurechnen und dann - nur beispielhaft - zur Erhöhung der Genauigkeit ein Mittelwert gebildet werden. Es wird hierbei deutlich, dass die Anordnungsinformation als eine Information ausgeführt ist, welche von einer Geometrie des Fahrzeuges 1 abhängig ist.

Besonders deutlich wird dieses Prinzip für die Variante, dass als die Kommunikationseinheiten 20 wenigstens drei Kommunikationseinheiten 20 jeweils mit unterschiedlichen Positionen am Fahrzeug 1 vorgesehen sind. In diesem Falle kann die Lokalisierung durch die Verarbeitungsvorrichtung 30 gemäß einer Triangulation durchgeführt werden. Auch ist es denkbar, und z. B. im in Figur 1 und 2 gezeigten Beispiel vorgesehen, dass als die Kommunikationseinheiten 20 wenigstens drei oder wenigstens vier oder wenigstens fünf oder maximal sechs Kommunikationseinheiten 20 jeweils mit unterschiedlichen Positionen am Fahrzeug 1 angeordnet sind, um eine Genauigkeit der Lokalisierung durch die Verarbeitungsvorrichtung 30 anhand der Anordnungsinformation über die unterschiedlichen Positionen zu erhöhen.

Um die Anordnungsinformation dauerhaft nutzen zu können, kann es vorgesehen sein, dass wenigstens eine Speichervorrichtung 40 zur Zwischenspeicherung der jeweiligen ermittelten Messinformation und/oder zur dauerhaften und/oder nicht-flüchtigen Speicherung der Anordnungsinformation vorgesehen ist, welche für ein Auslesen der Messinformationen und der Anordnungsinformation durch die Verarbeitungsvorrichtung 30 mit der Verarbeitungsvorrichtung 30 verbunden ist. Die Speichervorrichtung 40 weist z. B. wenigstens einen nicht-flüchtigen elektronischen Datenspeicher oder dergleichen auf. Die Verarbeitungsvorrichtung 30 und/oder die Speichervorrichtung 40 können insbesondere auch als ein System verstanden werden, welches am Fahrzeug 1 verteilte separate Elektronikkomponenten aufweist. Um die Anordnungsinformation erstmalig zu ermitteln, kann es vorgesehen sein, dass hierzu nach einer Montage der Kommunikationseinheiten 20 am Fahrzeug 1 ein Anlernverfahren durchgeführt wird. Dieses umfasst beispielhaft zunächst einen Verfahrensschritt, dass nach der Montage von wenigstens zwei Kommunikationseinheiten 20 an unterschiedlichen Positionen am Fahrzeug 1 eine Positionsmessung der Positionen durchgeführt wird, um die Anordnungsinformation über die Positionen in einem Montagezustand der Kommunikationseinheiten 20 zu bestimmen. Anschließend kann die Anordnungsinformation in einer nicht-flüchtigen Speichervorrichtung 40 gespeichert werden, z. B. automatisiert durch eine Fahrzeugelektronik, vorzugsweise durch die Verarbeitungsvorrichtung 30.

Es kann möglich sein, dass die Speichervorrichtung 40 und/oder die Verarbeitungsvorrichtung 30 separat von den Kommunikationseinheiten 20 in wenigstens einen Steuergerät des Fahrzeuges 1 oder dergleichen integriert sind, wie in Figur 1 gezeigt ist. Figur 2 zeigt dagegen eine weitere Möglichkeit, dass alternativ oder zusätzlich die Verarbeitungsvorrichtung 30 und/oder die Speichervorrichtung 40 in wenigstens einer der Kommunikationseinheiten 20 integriert ist. Die letztere Variante hat den Vorteil, dass eine der Kommunikationseinheiten 20 als eine Mastereinheit 50 ausgebildet sein kann, um selbst die Messinformation zu ermitteln und um wenigstens eine weitere Messinformation von der wenigstens einen weiteren Kommunikationseinheit 20 zu empfangen, welche durch die wenigstens eine weitere Kommunikationseinheit 20 ermittelt wurde. Entsprechend weist die Mastereinheit 50 die Verarbeitungsvorrichtung 30 auf, um anhand der selbst ermittelten Messinformation und der wenigstens einen weiteren empfangenen Messinformation und anhand der Anordnungsinformation über die Positionen der Kommunikationseinheiten 20 am Fahrzeug 1 das mobile Gerät 100 zu lokalisieren, vorzugsweise die Genauigkeit einzelner Messinformationen zur Lokalisierung zu erhöhen. Hingegen können die wenigstens eine weitere Kommunikationseinheit 20 als Slaveeinheit 51 konfiguriert sein, um die jeweils erfasste Messinformation an die Mastereinheit 50 zu übermitteln.

In Figur 1 ist ferner erkennbar, dass die Kommunikationseinheiten 20 jeweils wenigstens oder genau eine Antenne 22 aufweisen, welche außen am Fahrzeug 1 befestigt und/oder auf einen Außenbereich 5 des Fahrzeuges 1 ausgerichtet sind, um die Lokalisierung des mobilen Geräts 100 im Außenbereich 5 des Fahrzeuges 1 durchzuführen.

Die voranstehende Erläuterung der Ausführungsformen beschreibt die vorliegende Erfindung ausschließlich im Rahmen von Beispielen.

### Bezugszeichenliste

- 1: Fahrzeug
- 2: Heckklappe
- 3: Stoßfänger
- 4: Türgriff
- 5: Außenbereich
- 8: Schweller
- 9: Fahrzeugdach

- 10: Anordnung

- 20: Kommunikationseinheit, Funkeinheit, UWB-Einheit

- 20a: erste Kommunikationseinheit
- 20b: zweite Kommunikationseinheit
- 22: Antenne

- 30: Verarbeitungsvorrichtung

- 40: Speichervorrichtung

- 50: Mastereinheit
- 51: Slaveeinheit

- 60: Annäherungssensor

- 100: mobiles Gerät, Identifikationsgeber, Smartphone

- 120: Maximalabstand

## Patentansprüche

1. Anordnung (10) für ein Fahrzeug (1) zur Lokalisierung eines mobilen Geräts (100) relativ zum Fahrzeug (1), aufweisend:
- wenigstens zwei Kommunikationseinheiten (20) jeweils zur Kommunikation mit dem mobilen Gerät (100), welche an unterschiedlichen Positionen am Fahrzeug (1) angeordnet sind, um jeweils anhand der Kommunikation eine Messinformation über einen Standort des mobilen Geräts (100) zu ermitteln,
- eine Verarbeitungsvorrichtung (30), welche dazu ausgeführt ist, anhand der Messinformationen und anhand einer Anordnungsinformation über die Positionen der Kommunikationseinheiten (20) am Fahrzeug (1) das mobile Gerät (100) zu lokalisieren,
**dadurch gekennzeichnet, dass**
die Verarbeitungsvorrichtung (30) und/oder wenigstens eine weitere Verarbeitungsvorrichtung (30) dazu ausgeführt ist, die Kommunikation mit dem mobilen Gerät (100) nur dann zur Aktivierung von wenigstens einer Fahrzeugfunktion zu autorisieren, wenn ein anhand der Lokalisierung bestimmter Maximalabstand (120) des mobilen Geräts (100) zum Fahrzeug (1) eingehalten wird.

2. Anordnung (10) nach Anspruch 1,
**dadurch gekennzeichnet,**
**dass** die Anordnungsinformation als eine Information ausgeführt ist, welche anhand der wenigstens zwei Positionen der Kommunikationseinheiten (20) bestimmt ist, vorzugsweise eine Information über einen Unterschied der Positionen der Kommunikationseinheiten (20) am Fahrzeug (1).

3. Anordnung (10) nach Anspruch 1 oder 2,
**dadurch gekennzeichnet,**
**dass** die Kommunikationseinheiten (20) jeweils als UWB-Kommunikationseinheit (20) ausgebildet sind, um jeweils die Kommunikation als eine UWB-Kommunikation mit dem mobilen Gerät (100) durchzuführen und/oder, dass als die Kommunikationseinheiten (20) wenigstens drei Kommunikationseinheiten (20) jeweils mit unterschiedlichen Positionen am Fahrzeug (1) vorgesehen sind, um die Lokalisierung durch die Verarbeitungsvorrichtung (30) gemäß einer Triangulation durchzuführen.

4. Anordnung (10) nach einem der vorhergehenden Ansprüche,
**dadurch gekennzeichnet,**
**dass** als die Kommunikationseinheiten (20) wenigstens drei oder wenigstens vier oder wenigstens fünf oder maximal sechs Kommunikationseinheiten (20) jeweils mit unterschiedlichen Positionen am Fahrzeug (1) vorgesehen sind, um eine Genauigkeit der Lokalisierung durch die Verarbeitungsvorrichtung (30) anhand der Anordnungsinformation über die unterschiedlichen Positionen zu erhöhen.

5. Anordnung (10) nach einem der vorhergehenden Ansprüche,
**dadurch gekennzeichnet,**
**dass** die Anordnungsinformation als eine Information ausgeführt ist, welche von einer Geometrie des Fahrzeuges (1) abhängig ist.

6. Anordnung (10) nach einem der vorhergehenden Ansprüche,
**dadurch gekennzeichnet,**
**dass** die Kommunikationseinheiten (20) jeweils dazu ausgeführt sind, vorzugsweise jeweils kooperativ mit der oder wenigstens einer weiteren Verarbeitungsvorrichtung (30), die Messinformation durch eine Laufzeitmessung und/oder anhand einer Signalstärke bei der Kommunikation zu ermitteln, vorzugsweise um jeweils anhand der Messinformation einen Abstand zum mobilen Gerät (100) zu ermitteln.

7. Anordnung (10) nach einem der vorhergehenden Ansprüche,
**dadurch gekennzeichnet,**
**dass** wenigstens eine Speichervorrichtung (40) zur Zwischenspeicherung der jeweiligen ermittelten Messinformation und zur nicht-flüchtigen Speicherung der Anordnungsinformation vorgesehen ist, welche für ein Auslesen der Messinformationen und/oder der Anordnungsinformation durch die Verarbeitungsvorrichtung (30) mit der Verarbeitungsvorrichtung (30) verbunden ist.

8. Anordnung (10) nach einem der vorhergehenden Ansprüche,
**dadurch gekennzeichnet,**
**dass** eine der Kommunikationseinheiten (20) als eine Mastereinheit (50) ausgebildet ist, um selbst die Messinformation zu ermitteln und um wenigstens eine weitere Messinformation von der wenigstens einen weiteren Kommunikationseinheit (20) zu empfangen, welche durch die wenigstens eine weitere Kommunikationseinheit (20) ermittelt wurde, insbesondere dass die Mastereinheit (50) die Verarbeitungsvorrichtung (30) aufweist, um anhand der selbst ermittelten Messinformation und der wenigstens einen weiteren empfangenen Messinformation und anhand der Anordnungsinformation über die Positionen der Kommunikationseinheiten (20) am Fahrzeug (1) das mobile Gerät (100) zu lokalisieren, vorzugsweise die Genauigkeit einzelner Messinformationen zur Lokalisierung zu erhöhen.

9. Anordnung (10) nach Anspruch 8,
**dadurch gekennzeichnet,**
**dass** die wenigstens eine weitere Kommunikationseinheit (20) als Slaveeinheit (51) konfiguriert ist, um die jeweils erfasste Messinformation an die Mastereinheit (50) zu übermitteln.

10. Anordnung (10) nach einem der vorhergehenden Ansprüche,
**dadurch gekennzeichnet,**
**dass** jede der Kommunikationseinheiten (20) dazu ausgeführt ist, selbst eine jeweilige Lokalisierung, vorzugsweise eine Entfernungsmessung und/oder Standortbestimmung und/oder Ortung und/oder Bestimmung eines Maximalabstands (120) des mobilen Geräts (100) zum Fahrzeug (1), des mobilen Geräts (100) durchzuführen, wobei die Verarbeitungsvorrichtung (30) dazu ausgeführt ist, die Lokalisierung, vorzugsweise Entfernungsmessung und/oder Standortbestimmung und/oder Ortung und/oder Bestimmung des Maximalabstands (120) des mobilen Geräts (100) zum Fahrzeug (1), anhand der Anordnungsinformation mit höherer Genauigkeit als die jeweiligen einzelnen Lokalisierungen der Kommunikationseinheiten (20) durchzuführen.

11. Anordnung (10) nach einem der vorhergehenden Ansprüche,
**dadurch gekennzeichnet,**
**dass** die Kommunikationseinheiten (20) jeweils wenigstens oder genau eine Antenne (22) aufweisen, welche außen am Fahrzeug (1) befestigt und/oder auf einen Außenbereich (5) des Fahrzeuges (1) ausgerichtet sind, um die Lokalisierung des mobilen Geräts (100) im Außenbereich des Fahrzeuges (1) durchzuführen, sodass ein Maximalabstand (120) des mobilen Geräts (100) zum Fahrzeug (1) anhand der Lokalisierung bestimmt werden kann.

12. Anordnung (10) nach einem der vorhergehenden Ansprüche,
**dadurch gekennzeichnet,**
**dass** der Maximalabstand (120) 1 m bis 10 m, bevorzugt 2 m bis 8 m, besonders bevorzugt 4 m bis 6 m beträgt.

13. Anordnung (10) nach einem der vorhergehenden Ansprüche,
**dadurch gekennzeichnet,**
**dass** ein Annäherungssensor (60) vorgesehen ist, vorzugsweise in einem Türgriff (4) des Fahrzeuges (1), um bei Detektion einer Annäherung eines Objektes die Kommunikation und/oder die Erfassung der jeweiligen Messinformation und/oder die Lokalisierung auszulösen.

14. Verfahren zur Lokalisierung eines mobilen Geräts (100) relativ zum Fahrzeug (1) durch eine Anordnung (10) nach einem der vorhergehenden Ansprüche, **wobei die nachfolgenden Schritte durchgeführt werden:**
- Ermitteln einer ersten Messinformation anhand einer ersten Kommunikation mit dem mobilen Gerät (100) durch eine erste Kommunikationseinheit (20a),
- Ermitteln wenigstens einer zweiten Messinformation anhand wenigstens einer zweiten Kommunikation mit dem mobilen Gerät (100) durch wenigstens eine zweite Kommunikationseinheit (20b),
- Durchführen einer Lokalisierung des mobilen Geräts (100) relativ zum Fahrzeug (1) anhand der ersten und der wenigstens zweiten Messinformation sowie anhand einer Anordnungsinformation über die Positionen der Kommunikationseinheiten (20) am Fahrzeug (1).

15. Verfahren zum Anlernen einer Anordnung (10) für ein Fahrzeug (1) zur Lokalisierung eines mobilen Geräts (100) relativ zum Fahrzeug (1) bei einer Anordnung (10) nach einem der vorhergehenden Ansprüche und/oder zur Vorbereitung einer Lokalisierung nach einem Verfahren nach einem der vorhergehenden Ansprüche,
**wobei die nachfolgenden Schritte durchgeführt werden:**
- Montage von wenigstens zwei Kommunikationseinheiten (20) an unterschiedlichen Positionen am Fahrzeug (1),
- Durchführen einer Positionsbestimmung der Positionen, um eine Anordnungsinformation über die Positionen in einem Montagezustand der Kommunikationseinheiten (20) zu bestimmen,
- Speichern der Anordnungsinformation in einer nicht-flüchtigen Speichervorrichtung (40).

## Claims

1. Arrangement (10) for a vehicle (1) for localizing a mobile device (100) relative to the vehicle (1), the arrangement (10) comprising :
- at least two communication units (20) each for communicating with the mobile device (100), which are arranged at different positions on the vehicle (1) in order to determine measurement information about a location of the mobile device (100) in each case on the basis of the communication,
- a processing device (30) which is designed to localize the mobile device (100) on the basis of the measurement information and on the basis of arrangement information about the positions of the communication units (20) on the vehicle (1),
**characterized in that**
the processing device (30) and/or at least one further processing device (30) is designed to authorize communication with the mobile device (100) to activate at least one vehicle function only if a maximum distance (120) of the mobile device (100) from the vehicle (1), determined on the basis of the localization, is maintained.

2. Arrangement (10) according to claim 1,
**characterized in that**
the arrangement information is implemented as information which is determined on the basis of the at least two positions of the communication units (20), preferably information about a difference in the positions of the communication units (20) on the vehicle (1).

3. Arrangement (10) according to claim 1 or 2,
**characterized in that**
the communication units (20) are each designed as a UWB communication unit (20) in order to carry out the communication as a UWB communication with the mobile device (100) and/orin that at least three communication units (20) are provided as the communication units (20), each with different positions on the vehicle (1), in order to carry out the localization by the processing device (30) in accordance with triangulation.

4. Arrangement (10) according to one of the preceding claims,
**characterized in that**
at least three or at least four or at least five or at most six communication units (20) are provided as the communication units (20), each with different positions on the vehicle (1), in order to increase the accuracy of localization by the processing device (30) on the basis of the arrangement information about the different positions.

5. Arrangement (10) according to one of the preceding claims,
**characterized in that**
the arrangement information is implemented as information which is dependent on a geometry of the vehicle (1).

6. Arrangement (10) according to one of the preceding claims,
**characterized in that**
the communication units (20) are each designed, preferably in each case cooperatively with the or at least one further processing device (30), to determine the measurement information by means of a runtime measurement and/or on the basis of a signal strength during communication, preferably in order to determine a distance to the mobile device (100) in each case on the basis of the measurement information.

7. Arrangement (10) according to one of the preceding claims,
**characterized in that**
at least one storage device (40) is provided for the intermediate storage of the respective determined measurement information and for the non-volatile storage of the arrangement information, which is connected to the processing device (30) for reading out the measurement information and/or the arrangement information by the processing device (30).

8. Arrangement (10) according to one of the preceding claims,
**characterized in that**
one of the communication units (20) is designed as a master unit (50) in order to determine the measurement information itself and in order to receive at least one further piece of measurement information from the at least one further communication unit (20), which was determined by the at least one further communication unit (20), in particular **in that** the master unit (50) has the processing device (30), in order to localize the mobile device (100) on the basis of the self-determined measurement information and the at least one further received measurement information and on the basis of the arrangement information about the positions of the communication units (20) on the vehicle (1), preferably to increase the accuracy of individual measurement information for localization.

9. Arrangement (10) according to claim 8,
**characterized in that**
the at least one further communication unit (20) is configured as a slave unit (51) in order to transmit the respectively acquired measurement information to the master unit (50).

10. Arrangement (10) according to one of the preceding claims,
**characterized in that**
each of the communication units (20) is designed to itself perform a respective localization, preferably a distance measurement and/or location determination and/or positioning and/or determination of a maximum distance (120) of the mobile device (100) to the vehicle (1), of the mobile device (100), the processing device (30) being designed for this purpose, to carry out the localization, preferably distance measurement and/or location determination and/or positioning and/or determination of the maximum distance (120) of the mobile device (100) to the vehicle (1), on the basis of the arrangement information with higher accuracy than the respective individual localizations of the communication units (20).

11. Arrangement (10) according to one of the preceding claims,
**characterized in that**
the communication units (20) each have at least or exactly one antenna (22), which is attached to the outside of the vehicle (1) and/or is aligned with an external area (5) of the vehicle (1), in order to carry out the localization of the mobile device (100) in the external area of the vehicle (1), so that a maximum distance (120) of the mobile device (100) from the vehicle (1) can be determined on the basis of the localization.

12. Arrangement (10) according to one of the preceding claims,
**characterized in that**
the maximum distance (120) is 1 m to 10 m, preferably 2 m to 8 m, particularly preferably 4 m to 6 m.

13. Arrangement (10) according to one of the preceding claims,
**characterized in that**
a proximity sensor (60) is provided, preferably in a door handle (4) of the vehicle (1), in order to trigger the communication and/or the recording of the respective measurement information and/or the localization when an object is detected approaching.

14. Method for localizing a mobile device (100) relative to the vehicle (1) by means of an arrangement (10) according to one of the preceding claims, **wherein the following steps are performed:**
- determining a first measurement information based on a first communication with the mobile device (100) by a first communication unit (20a),
- determining at least a second measurement information by means of at least a second communication with the mobile device (100) by at least a second communication unit (20b),
- performing a localization of the mobile device (100) relative to the vehicle (1) using the first and the at least second measurement information and using arrangement information about the positions of the communication units (20) on the vehicle (1).

15. Method for training an arrangement (10) for a vehicle (1) to localize a mobile device (100) relative to the vehicle (1) with an arrangement (10) according to one of the preceding claims and/or for preparing a localization according to a method according to one of the preceding claims,
**whereby the following steps are carried out:**
- mounting of at least two communication units (20) at different positions on the vehicle (1),
- performing position determination of the positions to determine arrangement information about the positions in an assembly state of the communication units (20),
- storing the arrangement information in a non-volatile memory device (40).

## Revendications

1. Agencement (10) pour un véhicule (1) pour localiser un appareil mobile (100) par rapport au véhicule (1), présentant :
- au moins deux unités de communication (20) respectivement pour la communication avec l'appareil mobile (100), qui sont disposées à différentes positions sur le véhicule (1), afin de déterminer respectivement à l'aide de la communication une information de mesure sur un emplacement de l'appareil mobile (100),
- un dispositif de traitement (30) qui est réalisé pour localiser l'appareil mobile (100) à l'aide des informations de mesure et à l'aide d'une information d'agencement sur les positions des unités de communication (20) sur le véhicule (1),
**caractérisé en ce que**
le dispositif de traitement (30) et/ou au moins un autre dispositif de traitement (30) est conçu pour autoriser la communication avec l'appareil mobile (100) pour l'activation d'au moins une fonction du véhicule uniquement lorsqu'une distance maximale (120) de l'appareil mobile (100) par rapport au véhicule (1), déterminée sur la base de la localisation, est respectée.

2. Agencement (10) selon la revendication 1,
**caractérisé en ce que**
l'information d'agencement est réalisée sous forme d'une information qui est déterminée à l'aide des au moins deux positions des unités de communication (20), de préférence une information sur une différence des positions des unités de communication (20) sur le véhicule (1).

3. Agencement (10) selon la revendication 1 ou 2,
**caractérisé en ce que**
les unités de communication (20) sont réalisées chacune en tant qu'unité de communication UWB (20) pour effectuer chacune la communication en tant que communication UWB avec l'appareil mobile (100) et/ou, **en ce qu'**il est prévu en tant qu'unités de communication (20) au moins trois unités de communication (20) ayant chacune des positions différentes sur le véhicule (1), pour effectuer la localisation par le dispositif de traitement (30) selon une triangulation.

4. Agencement (10) selon l'une quelconque des revendications précédentes,
**caractérisé en ce que**
en tant qu'unités de communication (20), au moins trois ou au moins quatre ou au moins cinq ou au maximum six unités de communication (20) sont prévues respectivement avec des positions différentes sur le véhicule (1), afin d'augmenter une précision de la localisation par le dispositif de traitement (30) à l'aide de l'information d'agencement sur les différentes positions.

5. Agencement (10) selon l'une quelconque des revendications précédentes,
**caractérisé en ce que**
l'information d'agencement est réalisée sous la forme d'une information qui dépend d'une géométrie du véhicule (1).

6. Agencement (10) selon l'une quelconque des revendications précédentes,
**caractérisé en ce que**
les unités de communication (20) sont respectivement réalisées pour déterminer, de préférence respectivement en coopération avec le ou au moins un autre dispositif de traitement (30), l'information de mesure par une mesure du temps de propagation et/ou à l'aide d'une intensité de signal lors de la communication, de préférence pour déterminer respectivement à l'aide de l'information de mesure une distance par rapport à l'appareil mobile (100).

7. Agencement (10) selon l'une quelconque des revendications précédentes,
**caractérisé en ce que**
est prévu au moins un dispositif de mémoire (40) pour la mémorisation intermédiaire de l'information de mesure respective déterminée et pour la mémorisation non volatile de l'information d'agencement, lequel est relié au dispositif de traitement (30) pour une lecture des informations de mesure et/ou de l'information d'agencement par le dispositif de traitement (30).

8. Agencement (10) selon l'une quelconque des revendications précédentes,
**caractérisé en ce que**
l'une des unités de communication (20) est conçue comme une unité maître (50) pour déterminer elle-même l'information de mesure et pour recevoir au moins une autre information de mesure de la au moins une autre unité de communication (20), laquelle a été déterminée par la au moins une autre unité de communication (20), en particulier **en ce que** l'unité maître (50) présente le dispositif de traitement (30), pour localiser l'appareil mobile (100) à l'aide de l'information de mesure déterminée par lui-même et de l'au moins une autre information de mesure reçue et à l'aide de l'information d'agencement sur les positions des unités de communication (20) sur le véhicule (1), de préférence pour augmenter la précision des différentes informations de mesure pour la localisation.

9. Agencement (10) selon la revendication 8,
**caractérisé en ce que**
l'au moins une autre unité de communication (20) est configurée comme unité esclave (51) pour transmettre l'information de mesure respectivement saisie à l'unité maître (50).

10. Agencement (10) selon l'une quelconque des revendications précédentes,
**caractérisé en ce que**
chacune des unités de communication (20) est réalisée pour effectuer elle-même une localisation respective, de préférence une mesure de distance et/ou une détermination de position et/ou une localisation et/ou une détermination d'une distance maximale (120) de l'appareil mobile (100) par rapport au véhicule (1), de l'appareil mobile (100), le dispositif de traitement (30) étant réalisé à cet effet, d'effectuer la localisation, de préférence la mesure de la distance et/ou la détermination de la position et/ou la localisation et/ou la détermination de la distance maximale (120) de l'appareil mobile (100) par rapport au véhicule (1), à l'aide de l'information d'agencement avec une précision supérieure à celle des localisations individuelles respectives des unités de communication (20).

11. Agencement (10) selon l'une quelconque des revendications précédentes,
**caractérisé en ce que**
les unités de communication (20) présentent chacune au moins ou exactement une antenne (22) qui est fixée à l'extérieur du véhicule (1) et/ou orientée vers une zone extérieure (5) du véhicule (1), afin d'effectuer la localisation de l'appareil mobile (100) dans la zone extérieure du véhicule (1), de sorte qu'une distance maximale (120) de l'appareil mobile (100) par rapport au véhicule (1) peut être déterminée à l'aide de la localisation.

12. Agencement (10) selon l'une quelconque des revendications précédentes,
**caractérisé en ce que**
la distance maximale (120) est de 1 m à 10 m, de préférence de 2 m à 8 m, de manière particulièrement préférée de 4 m à 6 m.

13. Agencement (10) selon l'une quelconque des revendications précédentes,
**caractérisé en ce que**
un capteur de proximité (60) est prévu, de préférence dans une poignée de porte (4) du véhicule (1), pour déclencher la communication et/ou la saisie de l'information de mesure respective et/ou la localisation en cas de détection de l'approche d'un objet.

14. Procédé de localisation d'un dispositif mobile (100) par rapport au véhicule (1) par un ensemble (10) selon l'une des revendications précédentes, **dans lequel les étapes suivantes sont effectuées** :
- déterminer une première information de mesure à l'aide d'une première communication avec le dispositif mobile (100) par une première unité de communication (20a),
- déterminer au moins une deuxième information de mesure à l'aide d'au moins une deuxième communication avec l'appareil mobile (100) par au moins une deuxième unité de communication (20b),
- effectuer une localisation de l'appareil mobile (100) par rapport au véhicule (1) à l'aide des premières et des au moins deuxièmes informations de mesure ainsi qu'à l'aide d'une information d'agencement sur les positions des unités de communication (20) sur le véhicule (1).

15. Procédé d'apprentissage d'un agencement (10) pour un véhicule (1) pour localiser un appareil mobile (100) par rapport au véhicule (1) dans le cas d'un agencement (10) selon l'une des revendications précédentes et/ou pour préparer une localisation selon un procédé selon l'une des revendications précédentes,
**dans lequel les étapes suivantes sont effectuées :**
- le montage d'au moins deux unités de communication (20) à des positions différentes sur le véhicule (1),
- effectuer une détermination de position des positions pour déterminer des informations d'agencement sur les positions dans un état de montage des unités de communication (20),
- stocker les informations d'agencement dans un dispositif de mémoire non volatile (40).
